## Europäisches Patentamt
## European Patent Office
## Office européen des brevets

(19)

(11) Numéro de publication : **0 172 118 B1**

## (12) FASCICULE DE BREVET EUROPÉEN

(45) Date de publication du fascicule du brevet :
**20.01.88**

(51) Int. Cl.⁴ : **D 21 C  5/02**

(21) Numéro de dépôt : **85420130.8**

(22) Date de dépôt : **16.07.85**

(54) **Procédé et installation pour le recyclage de vieux papiers imprimés.**

(30) Priorité : **17.07.84 FR 8411494**

(43) Date de publication de la demande :
**19.02.86 Bulletin 86/08**

(45) Mention de la délivrance du brevet :
**20.01.88 Bulletin 88/03**

(84) Etats contractants désignés :
**AT BE CH DE FR GB IT LI NL SE**

(56) Documents cités :
**FR-A- 2 158 798**
**FR-A- 2 480 321**
**ABSTRACT BULLETIN OF THE INSTITUTE OF PAPER CHEMISTRY, vol. 48, no. 8, février 1978, page 896, no. 8321, Appleton, Wisc., US; J. DE CEUSTER et al.: "Hydrogen peroxide bleaching in waste paper recycling"**
**TAPPI, vol. 58, no. 4, avril 1975, pages 78-83, Atlanta, Ga, US; A.J. FELTON: "Secondary fiber technology-1974"**
**TAPPI, vol. 62, no. 9, septembre 1979, pages 55-58, Atlanta, Ga, US; R.B. NELSON et al.: "The cleaning and bleaching of pulp produced from household wastes"**
**TAPPI, vol. 63, no. 10, octobre 1980, pages 83-86, Atlanta, Ga, US; H.E. ORTNER: "A high-consistency deinking system"**

(73) Titulaire : **CENTRE TECHNIQUE DE L'INDUSTRIE DES PAPIERS, CARTONS ET CELLULOSES**
**Domaine Universitaire B.P. 7110**
**F-38020 Grenoble Cedex (FR)**

(72) Inventeur : **Galland, Gérard**
**3 rue des Trois Epis**
**F-38100 Grenoble (FR)**
Inventeur : **Vernac, Yves**
**17 rue Casimir Brenier**
**F-38000 Grenoble (FR)**
Inventeur : **Bernard, Emile**
**18 allée F. Villon**
**F-38130 Echirolles (FR)**

(74) Mandataire : **Laurent, Michel et al**
**Cabinet Michel Laurent 20 rue Louis Chirpaz B.P. 32**
**F-69131 Ecully Cédex (FR)**

## Description

L'invention concerne un nouveau procédé de recyclage de vieux papiers imprimés ; elle se rapporte également à une installation pour la mise en œuvre de ce procédé.

Le recyclage des vieux papiers imprimés, sélectionnés ou non, est une technique en soi bien connue qu'il n'est donc pas utile de décrire ici longuement en détail. Dans un souci d'économie de matières premières, cette technique devient de plus en plus d'actualité.

Sommairement, ce recyclage nécessite deux opérations essentielles, à savoir une opération de désencrage et une opération de blanchiment, simultanée ou postérieure.

Le désencrage consiste à remettre les vieux papiers en suspension fibreuse, notamment par trituration dans un pulpeur en présence d'un agent alcalin, puis à éliminer l'encre de cette suspension pâteuse, notamment par flottation ou lavage.

Le blanchiment consiste à traiter la pâte par des agents dits de blanchiment, tels que notamment les agents oxydants (peroxyde d'hydrogène, hypochlorite de sodium), voire réducteurs (hydrosulfite de sodium), afin d'anoblir cette pâte ou compenser la perte de blancheur provoquée par le traitement alcalin lors du désencrage. Selon le cas, ce blanchiment peut être effectué à haute ou à basse concentration.

L'invention concerne un procédé de recyclage de vieux papiers, dans lequel la phase de blanchiment est effectuée après la phase de désencrage, de préférence à haute concentration.

D'une manière générale, en papèterie, on utilise toujours de grandes quantités d'eau. Dans un souci évident d'économie, après chaque phase d'épaississage, on cherche à recycler cette eau au maximum.

Il en est de même dans les procédés de désencrage proposés jusqu'alors.

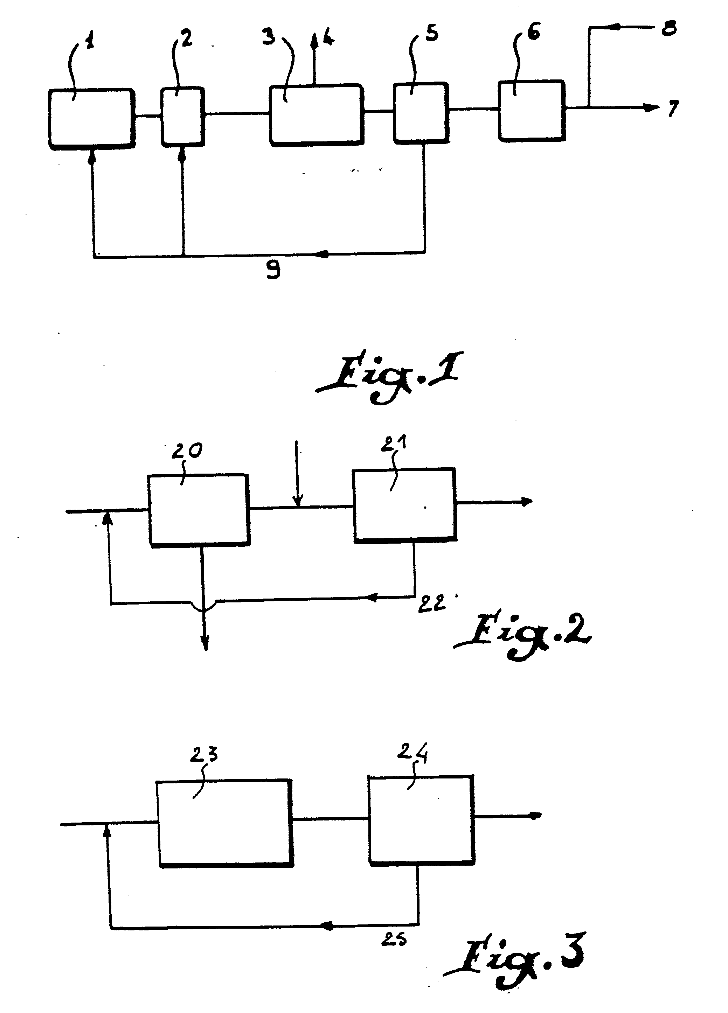

Sommairement, une installation pour le traitement de recyclage de ces vieux papiers, comprend essentiellement :
- quatre ensembles distincts (voir figure 1),
- un premier ensemble (1, 2) de mise en suspension pâteuse de ces vieux papiers triturés pour décrocher l'encre des fibres,
- un second ensemble (3) pour éliminer (4) l'encre de la suspension traitée,
- un troisième ensemble (6) pour blanchir la pâte à épurer,
- un quatrième ensemble (7) pour envoyer cette pâte blanchie dans le circuit d'utilisation.

Dans le désencrage, on distingue essentiellement trois types principaux de recyclage des eaux.

Dans un premier type illustré d'ailleurs à la figure 1, largement répandu, et particulièrement adapté aux chaînes de désencrage par flottation, la phase d'élimination de l'encre en (4) est suivie d'une phase d'épaississage (5) et les eaux de cet épaississage sont recyclées en (9) en tête de circuit (1, 2) pour permettre la mise en suspension des papiers ainsi que leur dilution.

Dans un second type, montré à la figure 2, dit à contrecourant, plus adapté au désencrage par lavage, après un stade d'épaississage (21), les eaux de ce stade (21) sont recyclées (22) en amont, donc à contrecourant en amont du stade d'épaississage précédent (20). Une telle technique est décrite dans TAPPI (A. J. Felton) Vol. 58, n° 4, Avril 1975, voir notamment figure 5 page 80.

Dans un troisième type, montré à la figure 3, dit à boucle courte, pour économiser des réactifs et des calories, la pâte après avoir été traitée avec des réactifs, et éventuellement traitée à chaud, est épaissie en (24) et les eaux de cet épaississage (24) sont recyclées en (25) en amont du stade de traitement (23). Une telle technique est décrite dans la publication Felton rappelée ci-dessus, figure 6 page 80. Dans une variante décrite dans « Paper Technology Industry », Avril 1977 n° 4 (voir notamment figure 15 page 132), on a proposé que ces eaux soient préalablement clarifiées, notamment par flottation afin d'éliminer l'encre.

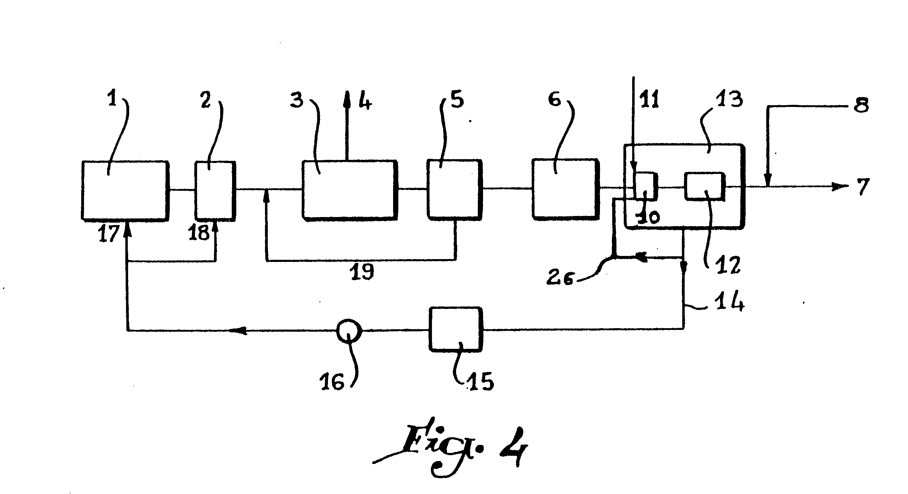

Dans le brevet FR-A-2 480 321 (voir notamment figures 2 et 3), on a suggéré d'éliminer la résine de la pâte et d'économiser les réactifs de blanchiment en combinant les deux types précédents de traitement, à savoir à contrecourant et à boucles courtes. Les eaux du lavage qui suit alors le blanchiment, et qui contiennent donc encore des produits réactifs, sont recyclées par une boucle courte juste en amont de la tour de blanchiment et simultanément, la résine est éliminée de la pâte par diverses opérations de lavage effectuées à contrecourant (voir figure 2).

Le procédé à boucle courte permet de récupérer les calories et des produits réactifs. Malheureusement, il ne permet pas d'éliminer les particules indésirables, telles que notamment l'encre puisqu'il n'y a pas de stade d'élimination, sauf à mettre un appareillage spécifique tel que prévu par Ceuster à la figure 15 de sa communication dans « Paper Technology Industry » 18 n° 4 — Avril 1977, ce qui est coûteux à installer et également à faire fonctionner.

Le procédé à contrecourant permet certes d'éliminer les particules indésirables telles que de l'encre, mais il ne permet pas de recycler efficacement des réactifs non consommés, car ces réactifs sont recyclés juste en amont d'un lavage, ce qui ne permet pas leur utilisation optimum, puisque leur concentration est fortement diminuée. En outre, ce procédé impose souvent de nombreuses dilutions qui diminuent d'autant l'efficacité des réactifs non consommés recyclés.

L'invention pallie ces inconvénients. Elle vise un procédé de recyclage de vieux papiers imprimés, par désencrage et blanchiment dans lequel les circuits de recyclage des eaux permettent d'améliorer les résultats au niveau de la blancheur, même avec des papiers imprimés d'origines très diverses, voire même non triés. Ce procédé facile et économique à mettre en oeuvre, n'entraîne pas une consommation excessive d'agents de blanchiment puisque toute la quantité introduite est utilisée, assure également une quasi-totale élimination de l'encre, permet de diminuer la quantité de produits solubles dans la pâte, et enfin est facilement adaptable aux installations existantes, même les plus variées, sans modifier les conditions opératoires de ces installations.

Ce procédé de recyclage de vieux papiers imprimés dans lequel :

- on transforme lesdits papiers en une suspension pâteuse ;
- on élimine l'encre de cette suspension ;
- puis on traite la pâte au moins partiellement désencrée par des réactifs de blanchiment ;
- on lave la pâte blanchie avant de l'envoyer dans un circuit d'utilisation ;
- et dans lequel les eaux de ce lavage de la pâte blanchie sont recyclées,

se caractérise en ce que les eaux de ce lavage de la pâte blanchie, qui contiennent l'encre résiduelle et des réactifs de blanchiment non consommés sont directement recyclées en totalité dans la phase initiale de mise en suspension pâteuse.

En d'autres termes :

- le blanchiment, outre sa fonction normale de blanchiment, sert également à décrocher l'encre résiduelle ;
- et le lavage après blanchiment sert à extraire de la pâte et à véhiculer en tête de circuit :

d'une part, cette encre résiduelle ainsi que celle qui a été décrochée au pulpeur mais qui n'a pas été éliminée par le premier passage dans la phase d'élimination,

d'autre part, les réactifs de blanchiment non consommés.

En pratique :

- le lavage de la pâte blanchie consiste :

tout d'abord, à diluer cette pâte à une concentration comprise entre 3 et 5 %,

puis à épaissir cette pâte diluée ;

- la pâte blanchie est éventuellement soumise à un traitement de dispersion préalablement au lavage, tel que par exemple un dépastillage ;
- les eaux de lavage sont d'abord éventuellement stockées avant d'être recyclées en totalité en tête de circuit ;
- les eaux de lavage sont recyclées dans le pulpeur de mise en suspension pâteuse des vieux papiers, jusqu'à obtenir la consistance appropriée pour ce pulpeur, puis l'excès des eaux est introduit dans l'organe de dilution qui suit ce pulpeur ;
- dans une variante, si les besoins en eaux lors de la mise en suspension sont inférieurs à la quantité produite par le lavage qui suit le blanchiment, afin de ne pas perdre les réactifs non consommés, l'excès des eaux de ce lavage est utilisé en partie pour diluer la pâte blanchie afin d'enrichir ces eaux en réactifs, bien que cela ne soit pas très favorable à l'élimination de l'encre ;
- ce procédé dans lequel la suspension est épaissie avant blanchiment, se caractérise également en ce que les eaux de cet épaississement sont recyclées en de l'étape d'élimination de l'encre ;

- on élimine l'encre notamment par flottation.

Comme déjà dit, on recycle en totalité ces eaux dans l'étape initiale, c'est-à-dire dans le pulpeur de trituration. Cette introduction s'effectue donc dans la partie la plus chaude et la plus concentrée de la partie amont de la chaîne, donc dans les meilleures conditions pour faire réagir les réactifs de blanchiment recyclés non consommés.

Comme dit également, les quantités d'eaux recyclées à ajouter dans ce pulpeur dépendent des conditions spécifiques de travail de ce pulpeur et ce, de manière à atteindre la consistance appropriée pour celui-ci selon qu'il s'agit d'un pulpeur à basse, moyenne ou haute consistance. L'excès d'eaux peut être ensuite envoyé dans le dilueur qui suit ce pulpeur. Si la chose est nécessaire, les eaux recyclées peuvent également être diluées avec des eaux blanches de la machine à papier et des eaux provenant de l'épaississage précédant le blanchiment.

Dans le procédé selon l'invention, comme on le voit, l'élimination effective et totale de l'encre s'effectue donc en un seul endroit, mais en deux phases distinctives, à savoir :

- une phase principale lors de la première flottation ;
- puis, une phase secondaire lors de cette même flottation, mais qui agit cette fois sur les encres résiduelles éliminées de la pâte lors du lavage et contenus dans les eaux de ce lavage recyclées en tête de circuit.

L'invention concerne également une installation pour le traitement de recyclage de vieux papiers imprimés du type comprenant :

- un premier ensemble de mise en suspension pâteuse de ces vieux papiers triturés pour décrocher l'encre des fibres ;
- un second ensemble pour éliminer l'encre de la suspension traitée ;
- un troisième ensemble pour blanchir la pâte ;
- un quatrième ensemble pour envoyer la pâte blanchie dans le circuit d'utilisation ;
- un cinquième ensemble de lavage de la pâte blanchie, placé entre le troisième et le quatrième ensemble.

Cette installation se caractérise en ce qu'elle comprend également des moyens pour récupérer les eaux de ce cinquième ensemble de lavage et les recycler en totalité dans le premier ensemble.

La manière dont l'invention peut être réalisée et les avantages qui en découlent ressortiront mieux des exemples de réalisation qui suivent donnés à titre indicatif mais non limitatif à l'appui des figures annexées.

La figure 1 symbolise la chaîne synoptique d'un circuit de désencrage conforme à l'art antérieur.

Les figures 2 et 3 schématisent comme déjà dit deux autres chaînes de l'art antérieur visées dans le préambule.

La figure 4 symbolise le même circuit général qu'à l'exemple 1, mais conforme à l'invention.

Un circuit pour le recyclage de vieux papiers avec phase de désencrage et blanchiment selon l'art antérieur montré à la figure 1 se compose essentiellement :

- d'un pulpeur (1) destiné à recevoir les vieux papiers et à les triturer ;

- d'un organe de dilution (2), en une ou plusieurs étapes, pouvant comporter un stockage intermédiaire ;

- d'un organe d'élimination (3) de l'encre en (4), notamment par flottation ou lavage, suivi d'un épaississeur (5), puis d'une tour de blanchiment (6) notamment descendante. La pâte sort de la tour (6) et est envoyée par des conduits (7) vers la machine à papier. Le conduit (8) désigne l'amenée d'eaux blanches depuis la machine à papier. Enfin, le circuit (9) désigne le recyclage des eaux depuis l'épaississeur (5) jusqu'au pulpeur (1) ou jusqu'à l'organe de dilution (2).

Selon la nature des pulpeurs utilisés, la consistance de la pâte au départ est de l'ordre de 5 % (basse), 15 % (moyenne), voire 30 % (haute). Après passage dans le dilueur (2), la consistance est d'environ 0,8 à 2 % pour la flottation et de 0,8 à 5 % dans le cas du lavage. Après épaississage, cette consistance remonte à 15 voire 30 % dans la tour de blanchiment (6), pour être ramenée de 3 à 5 % en (7), de manière à ce que la suspension soit pompable.

Selon l'invention (voir figure 4), cette installation est modifiée de la manière suivante. A la sortie de la tour de blanchiment, un organe de dilution (10) amène la pâte à une consistance de l'ordre de 3 à 5 %. Cet organe de dilution pourra être situé soit à la base de la tour de blanchiment (6), soit après cette tour. Dans ce dernier cas, cet organe pourra être constitué, soit par un cuvier de dilution, soit par un dispositif permettant de réaliser la dilution en continu. L'eau de dilution est amenée par le conduit (11). Elle est avantageusement constituée par de l'eau claire ou éventuellement de l'eau provenant de l'épaississeur (5) de la machine à papier ou par un mélange de ces différentes eaux.

La pâte est ensuite envoyée à un épaississeur (12) qui ramène la consistance à 10, voire 30 %. La pâte est ensuite à nouveau diluée par des eaux amenées par le conduit (8), puis est envoyée par le conduit (7) dans la machine à papier ou vers un appareil de conditionnement. Un conduit (14) récupère les eaux de lavage (13), qui soit directement soit après un cuvier de stockage intermédiaire (15) ou soit par une pompe (16), sont alors recyclées en totalité en (17), c'est-à-dire dans le pulpeur (1) et éventuellement en partie en (18) dans le cuvier de dilution (2).

Comme déjà dit, avantageusement, l'excès des eaux (14) peut être aussi recyclé simultanément par un conduit (26) à la base de la tour de blanchiment (6), et plus précisément dans l'organe de dilution (10) placé en bas de cette tour (6).

Un conduit (19) permet de recycler les eaux de l'épaississeur (5) à la tête de l'ensemble (3) d'élimination de l'encre, de manière à ajuster la consistance dans cet ensemble d'élimination.

Exemple 1

De manière connue, on réalise un mélange de vieux papiers constitués par des brochures ordinaires imprimées. Ce mélange est constitué pour moitié de pâtes chimiques et pour moitié de pâtes mécaniques. La teneur en cendres de l'ensemble est voisine de 25 %.

Le traitement dans le premier ensemble pulpeur (1) est effectué en présence d'une composition de réactifs constitués par 1 % en poids d'hydroxyde de sodium, 2,5 % en poids de silicate de sodium, 0,6 % en poids d'acide gras. La température est maintenue aux environs de 45 °C et la consistance de la pâte est voisine de 6 %.

Dans toute la description, les pourcentages donnés en poids sont calculés par rapport au poids de la pâte sèche.

Après défibrage dans le pulpeur (1) et dépastillage, la suspension est diluée en (2), puis est envoyée dans l'ensemble de flottation (3) pour éliminer l'encre en (4), par exemple dans deux cellules de flottation verticales. Les mousses de flottation sont éliminées en (4). La pâte est ensuite épaissie sur un filtre à vide (5), puis dans une presse à vis, de manière à ce que la consistance soit appropriée pour le blanchiment à haute consistance.

Après passage dans une vis mélangeuse et réchauffeuse, la pâte est envoyée dans la tour de blanchiment (6) où elle reçoit 2 % en poids de peroxyde d'hydrogène et 1 % d'hydroxyde de sodium, 2,5 % de silicate de sodium et 0,2 de stabilisant organophosphorique. Après un temps de latence dans la tour de blanchiment (6) d'une heure en température, la pâte blanchie est envoyée dans le circuit machine (7).

Cette pâte présente une blancheur de 63 mesurée selon la norme AFNOR Q 03-039.

Exemple 2

On répète l'exemple 1 selon l'art antérieur en supprimant l'adjonction du peroxyde dans la tour (6) et en la remplaçant par une adjonction de peroxyde à raison de 0,7 % en poids dans le pulpeur (1).

Après traitement dans les mêmes conditions, la pâte a une blancheur de 60.

Exemple 3

On répète l'exemple 1 en ajoutant également dans le pulpeur (1) du peroxyde d'hydrogène à raison également de 0,7 % en poids ; On obtient une pâte dont la blancheur est de 64. Ces trois exemples illustrent l'état de la technique selon l'art antérieur.

Exemple 4

On répète l'exemple 1. La pâte blanchie dans la tour (6) est lavée en (13), c'est-à-dire est tout d'abord diluée en (10) pour être amenée par addition d'eaux blanches (8) et d'eaux claires (11) à une consistance de 3 %, puis par passage sur une vis inclinée type BAKER (12) cette pâte est épaissie à 16 % (voir figure 4). Les eaux (14) de cet épaississage sont envoyées dans le cuvier (15). Ces diluants contiennent des réactifs de blanchiment non consommés, ainsi que des fibres et des charges et de l'encre éliminées au cours du lavage (12). Grâce à la pompe (16), ces eaux sont renvoyées en totalité dans le pulpeur (1). Par analyse, on a déterminé que les eaux recyclées en (17) contiennent environ 0,7 % en poids de peroxyde d'hydrogène par rapport à la quantité de vieux papiers introduits dans ce pulpeur (1).

Après traitement dans les mêmes conditions qu'à l'exemple 1, la pâte obtenue présente une blancheur de 66.

Ainsi, pour la même quantité de peroxyde qu'à l'exemple 1, soit 2 %, la blancheur gagne trois points.

En outre, l'encre qui n'a pas été éliminée lors du premier passage en flottation (3) est entièrement récupérée dans le circuit (14, 15), pour être définitivement éliminée lors du second passage en flottation, donc au même endroit.

En d'autres termes, le procédé selon l'invention permet pour une quantité de peroxyde, donc d'agent de blanchiment, égale à celle de l'art antérieur, non seulement d'améliorer la blancheur, mais également et surtout d'éliminer totalement l'encre, ce que l'on ne savait faire jusqu'alors.

Exemple 5

On répète l'exemple 1 en remplaçant la quantité initiale de vieux papiers par un mélange constitué à raison de moitié en poids de vieux journaux et de moitié en poids de brochures ordinaires.
La pâte a une blancheur de 61.

Exemple 6

On répète l'exemple 5 dans les mêmes conditions qu'à l'exemple 2, c'est-à-dire avec adjonction de peroxydes seulement dans le pulpeur (1).
La pâte a une blancheur de 58.

Exemple 7

On répète l'exemple 5 avec également incorporation de peroxydes dans le pulpeur (1) à raison de 0,7 %. La pâte a une blancheur de 63.

Exemple 8

On répète l'exemple 5 mais dans les mêmes conditions qu'à l'exemple 4, c'est-à-dire conforme à l'invention.
La pâte obtenue a une blancheur de 66 soit un gain de cinq points pour une même quantité de peroxyde.

Exemple 9

On répète l'exemple 1 en remplaçant les vieux papiers par des brochures améliorées contenant peu de pâte mécanique.

Après traitement seulement à la tour de blanchiment (6) sans recyclage, la pâte présente une blancheur de 74.

Exemple 10

On répète l'exemple 9 selon les enseignements de l'invention, c'est-à-dire avec recyclage (14, 15, 17).

La pâte présente une blancheur de 78 soit un gain de cinq points pour une même quantité de peroxyde.

En résumé, le procédé selon l'invention permet non seulement d'utiliser toutes les quantités introduites d'agents de blanchiment, mais également à quantité égale, du moins par rapport à l'art antérieur, permet d'améliorer la blancheur et surtout d'éliminer totalement l'encre et ce en un seul point, ce que l'on ne savait faire jusqu'alors.

Dans le procédé selon l'invention, il est indispensable qu'un recyclage des eaux se fasse de suite après le blanchiment, de manière à ce que l'encre décrochée au cours de ce blanchiment, qui peut être considéré comme second stade de décrochage, soit extraite de la pâte et récupérée par le lavage additionnel.

En d'autres termes, ce recyclage des eaux a deux fonctions :
- utiliser la totalité des réactifs de blanchiment mis en oeuvre et non consommés ;
- compléter l'élimination de l'encre et ce, sans faire chuter le rendement matières.

Comme par ailleurs, ce procédé permet dans certains cas d'utiliser un excès des réactifs dont on sait qu'ils sont entièrement consommés et non perdus comme précédemment, cela favorise l'action de blanchiment dans la tour de blanchiment (6), ce qui est donc favorable pour l'obtention de pâte à haut niveau de blancheur.

Si le plus généralement, les trois étapes de blanchiment (6), dilution (10) et épaississage (12) peuvent être effectués dans des matériels séparés, il va de soi que sans sortir du cadre de l'invention, on peut réaliser ces étapes dans un seul et même matériel adapté à cet effet.

On aurait pu penser qu'un homme du métier soucieux d'économiser ou d'utiliser judicieusement les agents réactifs de blanchiment non consommés, aurait pu penser à recycler ces agents non consommés, d'autant que par ailleurs, le recyclage des eaux en général en des points très variés est connu depuis fort longtemps en papeterie. Or, malgré cela, à ce jour, personne n'a encore pensé à cette solution spécifique du recyclage de la totalité des eaux du lavage qui suit la phase de blanchiment dans la phase initiale de mise en suspension, a fortiori à la disposition concentrique particulière des deux boucles (14, 19) de ce recyclage. Cela montre bien que cette solution ne s'imposait pas à l'évidence.

De la sorte, les eaux recyclées en ce point déterminé, à savoir celui de la mise en suspension initiale (1) :

- tout d'abord, effectuent un blanchiment secondaire qui favorisera l'action ultérieure du blanchiment principal ;

- ensuite, véhiculent les petites particules d'encre décrochées, mais non éliminées, à la première flottation, ainsi que celles décrochées lors de ce blanchiment, pour les ramener à ce même poste de flottation.

En d'autres termes, ce recyclage provoque une interréaction avec le cycle principal.

Ainsi, ce recyclage ne découle pas de manière évidente de l'état de la technique, car non seulement il améliore de manière inattendue l'action de blanchiment, sans augmenter la consommation d'agents réactifs, mais surtout permet d'éliminer l'encre résiduelle, ce que l'on ne savait faire jusqu'alors, pour évacuer définitivement cette encre en un seul point, à savoir le poste même de flottation ou analogue prévu à cet effet.

Le procédé d'installation selon l'invention peut être utilisé avantageusement pour le traitement de recyclage des vieux papiers imprimés d'origine les plus variés, triés ou non.

## Revendications

1. Procédé de recyclage de vieux papiers imprimés, dans lequel :

- on transforme lesdits papiers en une suspension pâteuse (1, 2) ;

- on élimine l'encre de cette suspension (3, 4) ;

- puis, on traite la pâte épurée au moins partiellement désencrée par des réactifs de blanchiment (6) ;

- on lave (10) la pâte blanchie avant de l'envoyer dans un circuit d'utilisation (7) ;

- et dans lequel les eaux (14) de ce lavage (10, 13) de la pâte blanchie sont recyclées, caractérisé en ce que lesdites eaux (14) de ce lavage (10, 13) de la pâte blanchie (6), qui contiennent l'encre résiduelle et des réactifs de blanchiment non consommés, sont directement recyclées en totalité dans la phase initiale (1, 2) de mise en suspension pâteuse.

2. Procédé selon la revendication 1, caractérisé en ce que la pâte blanchie (6) est dépastillée préalablement au lavage.

3. Procédé selon l'une des revendications 1 et 2, caractérisé en ce que les eaux (14) de ce lavage (10, 13) sont d'abord stockées (15) avant d'être recyclées en totalité et directement en tête du circuit de mise en suspension pâteuse (1, 2, 17, 18).

4. Procédé selon l'une des revendications 1 à 3, caractérisé en ce que les eaux de lavage (14, 17) sont recyclées dans le pulpeur (1) de mise en suspension pâteuse des vieux papiers jusqu'à obtenir la consistance appropriée pour ce pulpeur (1), puis en ce que l'excès (18) des eaux (14) est introduit ensuite dans un organe de dilution (2) disposé de suite après ce pulpeur (1).

5. Procédé selon l'une des revendications 1 à 4, caractérisé en ce que l'excès des eaux recyclées (14) est amené (26) à l'organe (10) de dilution de la pâte blanchie (6).

6. Procédé selon la revendication 1 dans lequel la suspension est épaissie avant le blanchiment, caractérisé en ce que les eaux (19) de cet épaississement (5) sont recyclées en tête de l'étape (3) d'élimination de l'encre.

7. Procédé selon la revendication 1, caractérisé en ce que l'on élimine l'encre par flottation (3).

8. Installation pour le traitement de recyclage de vieux papiers comprenant :

- un premier ensemble (1, 2) de mise en suspension pâteuse de ces vieux papiers triturés pour décrocher l'encre des fibres ;

- un second ensemble (3) pour éliminer en (4) l'encre de la suspension traitée ;

- un troisième ensemble (6) pour blanchir la pâte épurée ;

- un quatrième ensemble (7) pour envoyer la pâte blanchie dans le circuit d'utilisation,

- un cinquième ensemble de lavage (13) de la pâte blanchie, placé entre le troisième (6) et le quatrième (7) ensemble,

caractérisée en ce qu'elle comprend également des moyens (15, 16) pour récupérer les eaux (14) de l'ensemble de lavage (13) et les recycler (17) directement et en totalité dans le premier ensemble (1, 2).

9. Installation selon la revendication 8, caractérisée en ce qu'elle comporte un épaississeur (5) disposé entre le second ensemble (3) pour éliminer l'encre et le troisième ensemble (6) pour blanchir la pâte épurée et en ce qu'elle comprend également des moyens (19) pour recycler les eaux de cet épaississeur (5) en tête de l'ensemble (3) d'élimination de l'encre.

10. Installation selon l'une des revendications 8 et 9, caractérisée en ce qu'elle comprend :

- des moyens (18) pour recycler une partie de la totalité des eaux (14) sur un organe de dilution (2) disposés de suite après le pulpeur (1) formant le premier ensemble de mise en suspension pâteuse,

- des moyens (26) pour recycler une partie de ces eaux (14) à un organe (10) de dilution de la pâte blanchie (6).

## Claims

1. Process for recycling waste printed papers, in which :

- the said papers are converted into a slush pulp (1, 2) ;

- the ink is removed from the suspension (3, 4) ;

- the purified, at least partially de-inked pulp is then treated with bleaching agents (6) ;

- the bleached pulp is washed (10) before use (7) ;

- and in which the waste waters (14) from this washing (10, 13) of the bleached pulp are recycled, characterized in that the said waste waters (14) from this washing (10, 13) of the bleached pulp (6), which contain the residual ink and the unconsumed bleaching reagents, are recycled directly as a whole into the initial stage (1, 2) of formation of a slush pulp.

2. Process according to Claim 1, characterized in that the bleached pulp (6) is deflaked before the washing.

3. Process according to either of Claims 1 and 2, characterized in that the waste waters (14) from this washing (10, 13) are first stored (15) before being recycled as a whole and directly to the head of the circuit of conversion into a slush pulp (1, 2, 17, 18).

4. Process according to one of Claims 1, 3, characterized in that the washing waste waters (14, 17) are recycled into the pulper (1) for forming a slush pulp of waste papers until a consistency is obtained which is appropriate for this pulper (1), and in that the excess (18) of the waste waters (14) is then subsequently introduced into a dilution member (2) arranged directly following this pulper (1).

5. Process according to one of Claims 1-4, characterized in that the excess of the recycled waste waters (14) is conveyed (26) to the member (10) for diluting the bleached pulp (6).

6. Process according to Claim 1, in which the suspension is thickened before the bleaching, characterized in that the waste waters (19) from this thickening (5) are recycled to the head of the ink removal stage (3).

7. Process according to Claim 1, characterized in that the ink is removed by flotation (3).

8. Plant for the recycling treatment of waste papers comprising
- a first unit (1, 2) for forming a slush pulp from these waste papers, wet-ground to release the ink from the fibres ;
- a second unit (3) for removing at (4) the ink from the treated suspension ;
- a third unit (6) for bleaching the purified pulp ;
- a fourth unit (7) for conveying the bleached pulp into the use circuit, and
- a fifth unit for washing (13) the bleached pulp, placed between the third (6) and the fourth (7) unit,
characterized in that it also comprises means (15, 16) for recovering the waste waters (14) from the washing unit (13) and for recycling them (17) directly and as a whole into the first unit (1, 2).

9. Plant according to Claim 8, characterized in that it comprises a thickener (5) arranged between the second unit (3) for removing the ink and the third unit (6) for bleaching the purified pulp and in that it also comprises means (19) for recycling the waste waters from this thickener (5) to the head of the ink removal unit (3).

10. Plant according to either of Claims 8 and 9, characterized in that it comprises :
- means (18) for recycling a part of the whole of the waste waters (14) to a dilution unit (2) arranged immediately after the pulper (1) forming the first unit for forming a slush pulp, and
- means (26) for recycling a part of these waste waters (14) to a member (10) for diluting the bleached pulp (6).

**Patentansprüche**

1. Verfahren zur Wiedergewinnung von bedrucktem Altpapier, bei dem man
- aus dem genannten Altpapier eine Stoff Suspension (1, 2) herstellt,
- aus dieser Suspension (3, 4) die Druckfarbe entfernt,
- dann den abgetrennten und wenigstens teilweise von der Druckfarbe befreiten Stoff mit Bleichmitteln (6) behandelt,
- den gebleichten Stoff wascht, bevor man ihn einer Einrichtung (7) zur Weiterverarbeitung zuführt, und
- bei dem das von der Waschung (10, 13) des gebleichten Stoffes stammende Wasser (14) im Kreislauf zurückgeführt wird,
dadurch gekennzeichnet, daß das genannte, von der Waschung (10, 13) des gebleichten Stoffes (6) stammende Wasser, das die restliche Druckfarbe und unverbrauchte Bleichmittel enthält, in seiner Gesamtheit unmittelbar in die erste, der Herstellung der Stoff Suspension dienende Verfahrensstufe (1, 2) zurückgeführt wird.

2. Verfahren nach Anspruch 1, dadurch gekennzeichnet, daß der breiförmige Zustand der gebleichte Stoff (6) vor dem Waschen entsippt wird.

3. Verfahren nach einem der Ansprüche 1 und 2, dadurch gekennzeichnet, daß das von der Waschung (10, 13) stammende Wasser (14) zunächst gespeichert wird (15), bevor es in seiner Gesamtheit und unmittelbar dem Eingang der Stufe zur Herstellung der Stoff Suspension (1, 2, 17, 18) zugeführt wird.

4. Verfahren nach einem der Ansprüche 1 bis 3, dadurch gekennzeichnet, daß das Waschwasser (14, 17) der zur Herstellung der breiartigen Altpapier-Suspension dienenden Mischstufe (1) in einer solchen Menge zugeführt wird, daß die für diesen Stoffauflöser (1) geeignete Konsistenz erreicht wird, und daß dann der Überschuß (18) des Wassers (14) anschließend in eine Verdünnungsstufe (2) eingeführt wird, die der Mischstufe (1) nachgeschaltet ist.

5. Verfahren nach einem der Ansprüche 1 bis 4, dadurch gekennzeichnet, daß der Überschuß (26) an rückgeführtem Wasser (14) einer Einrichtung (10) zum Verdünnen des gebleichten Stoffes (6) zugeführt wird.

6. Verfahren nach Anspruch 1, bei dem die Stoff Suspension vor dem Bleichen eingedickt wird, dadurch gekennzeichnet, daß das bei der Eindickung (5) anfallende Wasser (19) zum Eingang der zum Entfernen der Druckfarbe dienenden Stufe (3) zurückgeführt wird.

7. Verfahren nach Anspruch 1, dadurch gekennzeichnet, daß die Druckfarbe durch Flotation (3) eliminiert wird.

8. Vorrichtung zur Durchführung eines Verfahrens zur Wiedergewinnung von Altpapier mit
- einer ersten Einrichtung (1, 2) zur Herstellung einer Stoff Suspension des gemahlenen Altpapiers zum Abtrennen der Druckfarbe von den Fasern,

- einer zweiten Einrichtung (3) zum Eliminieren bei (4) der Druckfarbe von der behandelten Suspension,

- einer dritten Einrichtung (6) zum Bleichen der abgetrennten Stoffes,

- einer vierten Einrichtung (7) zum Zuführen der gebleichten Stoffes zu einer der Weiterverarbeitung dienenden Einrichtung, und

- einer fünften Einrichtung (13) zum Waschen der gebleichten Stoffes die zwischen der dritten (6) und der vierten (7) Einrichtung angeordnet ist, dadurch gekennzeichnet, daß sie außerdem Mittel (15, 16) zum Rückgewinnen des Wassers (14) von der Wascheinrichtung (13) und zum direkten Zurückführen (17) der Gesamtmenge dieses Wassers in die erste Einrichtung (1, 2) aufweist.

9. Vorrichtung nach Anspruch 8, dadurch gekennzeichnet, daß sie einen Eindicker (5) aufweist, der zwischen der zweiten Einrichtung (3) zum Eliminieren der Druckfarbe und der dritten Einrichtung (6) zum Bleichen der abgetrennten Stoffes angeordnet ist, und außerdem Mittel (19) zum Rückführen des bei diesem Eindicker (5) rückgewonnen Wassers zum Eingang der Einrichtung (3) zum Eliminieren der Druckfarbe aufweist.

10. Vorrichtung nach einem der Ansprüche 8 und 9, dadurch gekennzeichnet, daß sie

- Mittel (18) zum Zurückführen eines Teiles der Gesamtheit des Wassers zu einer Verdünnungseinrichtung (2), die sich direkt hinter dem Stoffauflöser (1) befindet, die die erste Einrichtung zur Herstellung der Stoff Suspension bildet,

- und Mittel (26) zum Zurückführen eines Teiles dieses Wassers zu einer Einrichtung (10) zum Verdünnen des gebleichten Stoffes (6) umfaßt.

*Fig.1*

*Fig.2*

*Fig.3*

Fig. 4

0 172 118